Europäisches Patentamt

European Patent Office

Office européen des brevets

(11) Veröffentlichungsnummer: **0 144 021**
**B1**

(12) **EUROPÄISCHE PATENTSCHRIFT**

(45) Veröffentlichungstag der Patentschrift:
27.01.88

(51) Int. Cl.⁴: **C 08 F 10/00, C 08 F 4/64**

(21) Anmeldenummer: **84113765.6**

(22) Anmeldetag: **14.11.84**

(54) **Verfahren zum Herstellen von Homo- und Copolymerisaten von alpha-Monoolefinen mittels eines Ziegler-Natta-Katalysatorsystems.**

(30) Priorität: **22.11.83 DE 3342039**

(43) Veröffentlichungstag der Anmeldung:
**12.06.85 Patentblatt 85/24**

(45) Bekanntmachung des Hinweises auf die Patenterteilung:
**27.01.88 Patentblatt 88/4**

(84) Benannte Vertragsstaaten:
**BE DE FR GB IT NL**

(56) Entgegenhaltungen:
**EP - A - 0 017 895**
**EP - A - 0 036 536**
**DE - A - 3 241 999**

(73) Patentinhaber: **BASF Aktiengesellschaft,
Carl-Bosch-Strasse 38, D-6700 Ludwigshafen (DE)**

(72) Erfinder: **Staiger, Gerhard, Dr., Virchowstrasse 26,
D-6712 Bobenheim-Roxheim (DE)**
Erfinder: **Gruber, Wolfgang, Dr., Lorscher Ring 2b,
D-6710 Frankenthal (DE)**

## Beschreibung

Die vorliegende Erfindung betrifft der Art nach ein Verfahren zum Herstellen von Homo- und Copolymerisaten von $C_2$- bis $C_{12}$-, insbesondere $C_2$- bis $C_6$-$\alpha$-Monoolefinen bei Temperaturen von 20 bis 160, insbesondere 50 bis 120 °C und Drücken von 1 bis 100, insbesondere 20 bis 70 bar mittels eines Ziegler-Natta-Katalysatorsystems aus

(1)     einer modifizierten Titankomponente, die erhalten wird, indem man

(1.a)   zunächst

(1.a.1) Titantetrachlorid,

(1.a.2) eine modifizierende Komponente und

(1.a.3) ein, einen Teilchendurchmesser von 0,05 bis 5,0 mm, insbesondere 0,5 bis 3 mm aufweisendes Magnesiumalkoholat der Formel $Mg(OR^1)_2$, worin $R^1$ steht für einen einwertigen, nicht mehr als 10, vorzugsweise nicht mehr als 8 Kohlenstoffatome aufweisenden Kohlenwasserstoffrest gesättigt-aliphatischer und/oder aromatischer Natur, insbesondere einen nicht mehr als 4 Kohlenstoffatome aufweisenden Alkylrest, zu einem festen Zwischenprodukt umsetzt und

(1.b)   dann

(1.b.1) Titantetrachlorid,

(1.b.2) das aus (1.a) resultierende feste Zwischenprodukt sowie – gegebenenfalls – zusätzlich

(1.b.3) eine weitere modifizierende Komponente zu einem Feststoff – als die modifizierte Titankomponente (1) – umsetzt,

(2)     einem Aluminiumalkyl der Formel $AlR^2_3$, worin $R^2$ steht für einen nicht mehr als 8, insbesondere nicht mehr als 4 Kohlenstoffatome aufweisenden Alkylrest, sowie

(3)     einem Cokatalysator,

mit den Massgaben, dass das Atomverhältnis Titan aus der modifizierten Titankomponente (1) : Aluminium aus dem Aluminiumalkyl (2) 1 : 10 bis 1 : 500, insbesondere 1 : 20 bis 1 : 200, und das Molverhältnis Aluminiumalkyl (2) : Cokatalysator (3) 10 : 8 bis 10 : 0,3, insbesondere 10 : 5 bis 10 : 0,5 beträgt.

Polymerisationsverfahren dieser Art sind bekannt; ihre Besonderheit gegenüber vergleichbaren anderen Verfahren liegt in der speziellen Ausgestaltung des Katalysatorsystems, wobei als Prototypen für den vorliegenden Fall die aus den EP-PS 17 895 und EP-OS 36 536 bekannten Verfahren genannt werden können.

Die speziellen Ausgestaltungen des Katalysatorsystems werden vorgenommen, um bestimmte Ziele zu erreichen, z.B. die folgenden:

(A) Katalysatorsysteme, die bei der Polymerisation von $\alpha$-Monoolefinen, wie insbesondere Propylen, zu Polymerisaten mit einem hohen Anteil an stereoregulärem (= isotaktischem) Polymerisat führen.

(B) Katalysatorsysteme, die eine erhöhte Ausbeute an Polymerisat zu liefern vermögen, nämlich Systeme mit einer erhöhten Produktivität, d.h. Systeme, bei denen die Menge an gebildetem Polymerisat pro Gewichtseinheit des Katalysatorsystems erhöht ist.

(C) Katalysatorsysteme, durch die weniger Halogen in das Polymerisat eingebracht werden; – was zu erreichen ist, indem die Ausbeute gemäss (B) gesteigert wird und/oder ein Titanhalogenid eingesetzt wird, das möglichst wenig Halogen erhält.

(D) Katalysatorsysteme, deren Aktivitätsmaximum über eine möglichst lange Zeit konstant bzw. relativ konstant bleibt; – was nicht nur für die Katalysatorausbeuten von erheblicher Bedeutung ist sondern auch von grosser Wichtigkeit beim Herstellen von Homo- und Copolymerisaten, insbesondere von Blockcopolymerisaten, nach dem sog. «Kaskaden»-Verfahren.

(E) Katalysatorsysteme, durch welche die morphologischen Eigenschaften der Polymerisate in bestimmter Weise beeinflusst werden, etwa im Sinne einer einheitlichen Korngrösse und/oder einer Verringerung der Feinstkornanteile und/oder eines hohen Schüttgewichtes; – was z.B. für die technische Beherrschung der Polymerisationssysteme, die Aufarbeitung der Polymerisate und/oder die Verarbeitbarkeit der Polymerisate von Bedeutung sein kann.

(F) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; – was z.B. für die Thermodynamik der Verfahrensführung von Bedeutung sein kann.

(G) Katalysatorsysteme, die auf spezielle Polymerisationsverfahren zugeschnitten sind; – etwa solche, die z.B. entweder auf die spezifischen Besonderheiten der Suspensionspolymerisation oder auf die spezifischen Besonderheiten der Trockenphasenpolymerisation abgestimmt sind.

(H) Katalysatorsysteme, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch spezielle Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muss.

In diesem Rahmen liegt auch die Aufgabenstellung der vorliegenden Erfindung: Eine neue Ausgestaltung eines Katalysatorsystems aufzuzeigen, mit der man gegenüber bekannten Ausgestaltungen – unter vergleichbarer Zielsetzung – bessere Ergebnisse erreichen kann, namentlich bessere Ergebnisse hinsichtlich der oben unter (C) und (D) aufgeführten Ziele bei zugleich möglichst geringer Zurücksetzung der unter (E) und (G) genannten Ziele.

Es wurde gefunden, dass die gestellte Aufgabe gelöst werden kann mit einem Katalysatorsystem der eingangs definierten Art, das (i) als modifizierte Titankomponente (1) eine in drei Stufen in besonderer Weise aus speziellen Ausgangsstoffen hergestellte enthält und (ii) als Cokatalysator (3) ein Trialkoxisilan einer bestimmten Art aufweist.

Gegenstand der vorliegenden Erfindung ist dementsprechend ein Verfahren der eingangs genannten Art.

Das erfindungsgemässe Verfahren ist dadurch gekennzeichnet,

dass man (i) als modifizierte Titankomponente (1) eine solche einsetzt, die erhalten wird, indem man zunächst

(1.1) in einer ersten Stufe ein Gemisch aus

(1.1.1) Titantetrachlorid

(1.1.2) einer modifizierenden Komponente aus

(1.1.2.1) einem Titansäureester der Formel Ti(OR$^3$)$_4$, worin R$^3$ steht für einen einwertigen, nicht mehr als 10, vorzugsweise nicht mehr als 8 Kohlenstoffatome aufweisenden Kohlenwasserstoffrest gesättigt-aliphatischer und/oder aromatischer Natur, insbesondere einen nicht mehr als 6 Kohlenstoffatome aufweisenden Alkylrest, sowie

(1.1.2.2) dem Säurechlorid der o-, m-, und/oder p-Phthalsäure, insbesondere der o-Phthalsäure, und

(1.1.3.) dem Magnesiumalkoholat
– wobei mengenmässig eingesetzt werden auf 100 Molteile des Titantetrachlorids 4 bis 20, insbesondere 8 bis 14 Molteile des Magnesiumalkoholats und auf 100 Molteile des Magnesiumalkoholats sowohl 3 bis 100, insbesondere 20 bis 60 Molteile des Titansäureesters als auch 5 bis 50, insbesondere 10 bis 30 Molteile des Säuredichlorids – unter ständiger Durchmischung 0,1 bis 2, insbesondere 0,2 bis 0,5 Stunden auf einer Temperatur im Bereich von 40 bis 180°C, insbesondere 80 bis 140°C hält und das dabei resultierende feste Zwischenprodukt unter Abtrennung der verbleibenden flüssigen Phase isoliert, hierauf

(1.2) in einer zweiten Stufe ein Gemisch aus

(1.2.1) Titantetrachlorid,

(1.2.2) dem aus Stufe (1.1) resultierenden festen Zwischenprodukt sowie – gegebenenfalls – zusätzlich

(1.2.3) dem Säuredichlorid der o-, m-, und/oder p-Phthalsäure, insbesondere o-Phthalsäure, als weiterer modifizierender Komponente,
– wobei mengenmässig eingesetzt werden auf 100 Gewichtsteile des Titantetrachlorids sowohl 1 bis 50, insbesondere 1 bis 20 Gewichtsteile des Zwischenprodukts als auch bis zu 15, insbesondere 1 bis 7 Gewichtsteile des Säuredichlorids – unter ständiger Durchmischung 0,1 bis 2, insbesondere 0,2 bis 0,8 Stunden auf einer Temperatur im Bereich von 40 bis 180°C, insbesondere 80 bis 140°C hält und das dabei resultierende feste Zwischenprodukt unter Abtrennung der verbleibenden flüssigen Phase isoliert, und schliesslich

(1.3) in einer dritten Stufe ein Gemisch aus

(1.3.1) Titantetrachlorid sowie

(1.3.2) dem aus Stufe (1.2) resultierenden festen Zwischenprodukt,
– wobei mengenmässig eingesetzt werden auf 100 Gewichtsteile des Titantetrachlorids 1 bis 50, insbesondere 1 bis 20 Gewichtsteile des Zwischenprodukts – unter ständiger Durchmischung 0,1 bis 2, insbesondere 0,2 bis 0,8 Stunden auf einer Temperatur im Bereich von 40 bis 180°C, insbesondere 80 bis 140°C hält und den dabei resultierenden Feststoff – als die modifizierte Titankomponente (1) – unter Abtrennung der verbleibenden flüssigen Phase isoliert, sowie,

dass man (ii) als Cokatalysator (3) einsetzt ein Trialkoxisilan der Formel R$^4$Si(OR$^5$)$_3$, worin R$^4$ steht für einen Phenylrest oder R$^5$, und R$^5$ steht für einen nicht mehr als 8, insbesondere nicht mehr als 4 Kohlenstoffatome aufweisenden Alkylrest.

Zu dem erfindungsgemässen Verfahren ist im einzelnen das Folgende zu bemerken:

Das Polymerisationsverfahren als solches kann – unter Beachtung der kennzeichnenden Besonderheit – in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisationsverfahren. Die erwähnten technologischen Ausgestaltungen – mit anderen Worten: die technologischen Varianten der Polymerisation von α-Monoolefinen nach Ziegler-Natta – sind aus der Literatur und Praxis wohlbekannt, so dass sich nähere Ausführungen zu ihnen erübrigen.

Der Vollständigkeit halber ist zu erwähnen, dass sich beim erfindungsgemässen Verfahren auch die Molekulargewichte der Polymerisate durch die einschlägig üblichen Massnahmen regeln lassen, z.B. mittels Reglern, wie insbesondere Wasserstoff.

Des weiteren ist noch festzuhalten, dass beim erfindungsgemässen Verfahren die Komponenten des Katalysatorsystems in mannigfacher Weise in den Polymerisationsraum eingebracht werden können, z.B. (i) die modifizierte Titankomponente (1) als eine Komponente, das Aluminiumalkyl (2) sowie der Cokatalysator (3) als zwei weitere Komponenten alle örtlich gemeinsam, (ii) die gleichen drei Komponenten alle örtlich getrennt voneinander, (iii) die modifizierte Titankomponente (1) einerseits und ein Gemisch aus (2) und (3) andererseits örtlich getrennt voneinander – was insbesondere beim Trockenphasen-Polymerisationsverfahren von Vorteil sein kann – oder (iiii) ein Gemisch aus der modifizierten Titankomponente (1) und dem Cokatalysator (3) einerseits und das Aluminiumalkyl (2) andererseits örtlich getrennt voneinander.

Was die stoffliche Seite des neuen Katalysatorsystems betrifft, ist im einzelnen das folgende zu sagen:

(1) Das zur Herstellung der modifizierten Titankomponente (1) einzusetzende Titantetrachlorid (1.1.1), (1.2.1) und (1.3.1) sollte ein bei Ziegler-Natta-Katalysatorsystemen übliches sein.

Der gleichfalls einzusetzende Titansäureester (1.1.2.1) sollte ebenfalls ein bei Ziegler-Natta-Katalysatorsystemen üblicher sein; seiner alkoholischen Komponente liegt zugrunde ein einwertiger, nicht mehr als 10, vorzugsweise nicht mehr als 8 Kohlenstoffatome aufweisender Kohlenwasserstoffrest gesättigt-aliphatischer und/oder aromatischer Natur, insbesondere ein nicht mehr als 6 Kohlenstoffatome aufweisender Alkylrest. Wie sich gezeigt hat, sind am besten geeignet die Ester, in deren oben wiedergegebener Formel $R^3$ steht für einen 4 bis 5 Kohlenstoffatome aufweisenden Alkylrest; – wozu namentlich zu nennen sind die Titansäureester des n-Butanols, i-Butanols und tert.-Butanols sowie des n-Pentanols, i-Pentanols und 2,2-Dimethylpropanols. Die Titansäureester können eingesetzt werden als Einzelindividuen oder in Form von Gemischen aus zwei oder mehr Einzelindividuen.

Das ferner einzusetzende Säuredichlorid (1.1.2.2) und gegebenenfalls (1.2.3) der o-, m-, oder p-Phthalsäure kann ein handelsübliches sein; es sollte vorteilhafterweise einen relativ hohen Reinheitsgrad aufweisen. Die Säuredichloride können ebenfalls eingesetzt werden als Einzelindividuen oder in Form von Gemischen aus zwei oder drei Einzelindividuen; die in Stufe (1.1) und – gegebenenfalls – Stufe (1.2) einzusetzenden Säuredichloride können gleich oder verschieden sein.

Das zur Herstellung der modifizierten Titankomponente (1) gleichfalls einzusetzende Magnesiumalkoholat (1.1.3) kann ein übliches, der angegebenen Formel gehorchendes sein. Besonders geeignet sind die Alkoholate, die abgeleitet sind vom Methyl-, Ethyl-, n-Propyl-, i-Propyl, n-Butyl-, i-Butyl oder tert.-Butylalkohol. Auch die Alkoholate können als Einzelindividuen oder in Form von Gemischen aus zwei oder mehr Einzelindividuen eingesetzt werden.

Die Herstellung der modifizierten Titankomponente (1) ist einfach und für den Fachmann ohne Erläuterungen möglich. Zu den Stufen (1.1), (1.2) und (1.3) ist lediglich zu erwähnen, dass die Isolierung des jeweils resultierenden Feststoffs zweckmässigerweise durch Absaugen, und die Abtrennung der verbleibenden flüssigen Phase zweckmässigerweise durch Waschen mit einem flüssigen Kohlenwasserstoff – bis dieser kein Titantetrachlorid mehr aufnimmt – erfolgt. Der hierbei in Betracht kommende flüssige Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird; – z.B. bei der Polymerisation von α-Monoolefinen. Als Beispiele für geeignete Kohlenwasserstoffe seien genannt: Pentane. Hexane, Heptane, Benzine und Cyclohexan.

(2) Als Aluminiumalkyle (2) mit der angegebenen Formel kommen die einschlägig üblichen, dieser Formel gehorchenden in Betracht; sie sind aus Literatur und Praxis so wohlbekannt, dass auf sie nicht näher eingegangen zu werden braucht. Als herausragender Vertreter sei beispielsweise genannt Triethylaluminium.

(3) Der das Katalysatorsystem vervollständigende Cokatalysator (3) ist erfindungsgemäss ein Trialkoxisilan mit der angegebenen Formel; er ist vorzugsweise ein Trialkoxiphenylsilan mit nicht mehr als vier Kohlenstoffatomen pro Alkoxigruppe, insbesondere das Triethoxiphenylsilan. Neben dem letztgenannten kommen beispielsweise auch die folgenden Trialkoxiphenylsilane in Betracht: Tri-n-propoxiphenylsilan, Tri-n-butoxiphenylsilan.

Das erfindungsgemässe Verfahren erlaubt es, Homo- und Copolymerisate, z.B. des binären oder ternären Typs, – auch Blockcopolymerisate – von $C_2$- bis $C_{12}$-, insbesondere $C_2$- bis $C_6$-α-Monoolefinen in vorteilhafter Weise herzustellen, wobei besonders geeignete zu polymerisierende α-Monoolefine Propen, Buten-1 und Hexen-1, sowie – vor allem zur Copolymerisation – Ethylen und ferner n-Okten-1, n-Decen-1 sowie n-Dodecen-1 sind.

*Beispiel*

Herstellen der modifizierten Titankomponente (1)

Es wird so verfahren, dass man zunächst

(1.1) in einer ersten Stufe ein Gemisch aus

(1.1.1) Titantetrachlorid,

(1.1.2) einer modifizierenden Komponente aus

(1.1.2.1) n-Butyltitanat sowie

(1.1.2.2) o-Phthalsäuredichlorid und

(1.1.3.) einem, einen Teilchendurchmesser von 0,5 bis 3 mm aufweisenden Magnesiumethylat

– wobei mengenmässig eingesetzt werden auf 100 Molteile des Titantetrachlorids 10 Molteile des Magnesiumalkoholats und auf 100 Molteile des Magnesiumalkoholats sowohl 50 Molteile des Titansäureesters als auch 25 Molteile des Säuredichlorids – unter ständiger Durchmischung mittels kräftigem Rühren 0,25 Stunden auf einer Temperatur im Bereich von 115 bis 118°C hält und das dabei resultierende feste Zwischenprodukt unter Abtrennung der verbleibenden flüssigen Phase durch Absaugen mittels einer Glasfritte und Waschen mit n-Heptan bis zur Farblosigkeit der Waschflüssigkeit isoliert, hierauf

(1.2) in einer zweiten Stufe ein Gemisch aus

(1.2.1) Titantetrachlorid sowie

(1.2.2) dem aus Stufe (1.1) resultierenden festen Zwischenprodukt

– wobei mengenmässig eingesetzt werden auf 100 Gewichtsteile des Titantetrachlorids 7 Gewichtsteile des Zwischenprodukts – unter ständiger Durchmischung mittels kräftigem Rühren 0,5 Stunden auf einer Temperatur im Bereich von 128 bis 134°C hält und das dabei resultierende feste Zwischenprodukt unter Abtrennung der verbleibenden flüssigen Phase durch Absaugen mittels einer Glasfritte und Waschen mit n-Heptan bis zur Farblosigkeit der Waschflüssigkeit isoliert, und schliesslich

(1.3)     in einer dritten Stufe ein Gemisch aus

(1.3.1)     Titantetrachlorid sowie

(1.3.2)     dem aus Stufe (1.2) resultierenden festen Zwischenprodukt,
– wobei mengenmässig eingesetzt werden auf 100 Gewichtsteile des Titantetrachlorids 7 Gewichtsteile des Zwischenprodukts – unter ständiger Durchmischung mittels kräftigem Rühren 0,5 Stunden auf einer Temperatur im Bereich von 129 bis 132°C hält und den dabei resultierenden Feststoff – als die modifizierte Titankomponente (1) – unter Abtrennung der verbleibenden flüssigen Phase durch Absaugen mittels einer Glasfritte und Waschen mit n-Heptan bis zur Farblosigkeit der Waschflüssigkeit isoliert.

Die so erhaltene modifizierte Titankomponente (1) hat einen Gehalt an Titan von 2,8 Gewichtsprozent.

*Polymerisation*

Ein Rührgefäss wird mit 500 ml n-Heptan, 0,2 mMol, gerechnet als Titan, der oben beschriebenen modifizierten Titankomponente (1), 10 mMol Aluminiumtriethyl als Aluminiumalkyl (2) sowie 1 mMol Triethoxiphenylsilan als Cokatalysator (3) beschickt.

Die eigentliche Polymerisation wird unter ständigem Rühren bei 60°C während 3 Stunden durchgeführt mit Propylen als Monomer, dessen Druck während der Polymerisation konstant auf 1 bar gehalten wird.

Das Polymerisat wird hierbei mit einer Ergiebigkeit von 420 g Polypropylen pro g Titankomponente (1) erhalten; es weist 2,9% in siedendem n-Heptan löslicher Anteile (als Mass für die Stereoregularität) auf und hat ausgezeichnete morphologische Eigenschaften, insbesondere eine sehr einheitliche Kornform.

**Patentanspruch**

Verfahren zum Herstellen von Homo- und Copolymerisaten von $C_2$- bis $C_{12}$-α-Monoolefinen bei Temperaturen von 20 bis 160°C und Drücken von 1 bis 100 bar mittels eines Ziegler-Natta-Katalysatorsystems aus

(1)     einer modifizierten Titankomponente, die erhalten wird, indem man

(1.a)     zunächst

(1.a.1)     Titantetrachlorid,

(1.a.2)     eine modifizierende Komponente und

(1.a.3)     ein, einen Teilchendurchmesser von 0,05 bis 5,0 mm aufweisendes Magnesiumalkoholat der Formel $Mg(OR^1)_2$, worin $R^1$ steht für einen einwertigen, nicht mehr als 10 Kohlenstoffatome aufweisenden Kohlenwasserstoffrest gesättigt-aliphatischer und/oder aromatischer Natur,
zu einem festen Zwischenprodukt umsetzt und

(1.b)     dann

(1.b.1)     Titantetrachlorid,

(1.b.2)     das aus (1.a) resultierende feste Zwischenprodukt sowie – gegebenenfalls – zusätzlich

(1.b.3)     eine weitere modifizierende Komponente zu einem Feststoff – als die modifizierte Titankomponente (1) – umsetzt,

(2)     einem Aluminiumalkyl der Formel $AlR^2_3$, worin $R^2$ steht für einen nicht mehr als 8, Kohlenstoffatome aufweisenden Alkylrest, sowie

(3)     einem Cokatalysator,
mit den Massgaben, dass das Atomverhältnis Titan aus der modifizierten Titankomponente (1) : Aluminium aus dem Aluminiumalkyl (2) 1 : 10 bis 1 : 500, und das Molverhältnis Aluminiumalkyl (2) : Cokatalysator (3) 10 : 8 bis 10 : 0,3 beträgt.
dadurch gekennzeichnet,
dass man (i) als modifizierte Titankomponente (1) eine solche einsetzt, die erhalten wird, indem man zunächst

(1.1)     in einer ersten Stufe ein Gemisch aus

(1.1.1)     Titantetrachlorid,

(1.1.2)     einer modifizierenden Komponente aus

(1.1.2.1)     einem Titansäureester der Formel $Ti(OR^3)_4$, worin $R^3$ steht für einen einwertigen, nicht mehr als 10 Kohlenstoffatome aufweisenden Kohlenwasserstoffrest gesättigt-aliphatischer und/oder aromatischer Natur, sowie

(1.1.2.2)     dem Säurechlorid der o-, m-, und/oder p-Phthalsäure, und

(1.1.3.)     dem Magnesiumalkoholat
– wobei mengenmässig eingesetzt werden auf 100 Molteile des Titantetrachlorids 4 bis 20 Molteile des Magnesiumalkoholats und auf 100 Molteile des Magnesiumalkoholats sowohl 3 bis 100 Molteile des Titansäureesters als auch 5 bis 50 Molteile des Säuredichlorids – unter ständiger Durchmischung 0,1 bis 2 Stunden auf einer Temperatur im Bereich von 40 bis 180°C hält und das dabei resultierende feste Zwischenprodukt unter Abtrennung der verbleibenden flüssigen Phase isoliert, hierauf

(1.2)     in einer zweiten Stufe ein Gemisch aus

(1.2.1)     Titantetrachlorid,

(1.2.2)     dem aus Stufe (1.1) resultierenden festen Zwischenprodukt sowie – gegebenenfalls – zusätzlich

(1.2.3)     dem Säuredichlorid der o-, m-, und/oder p-Phthalsäure, als weiterer modifizierender Komponente,
– wobei mengenmässig eingesetzt werden auf 100 Gewichtsteile des Titantetrachlorids sowohl 1 bis 50 Gewichtsteile des Zwischenprodukts als auch bis zu 15 Gewichtsteile des Säuredichlorids – unter ständiger Durchmischung 0,1 bis 2 Stunden auf einer Temperatur im Bereich von 40 bis 180°C hält und das dabei resultierende feste Zwischenprodukt unter Abtrennung der verbleibenden flüssigen Phase isoliert, und schliesslich

(1.3)    in einer dritten Stufe ein Gemisch aus
(1.3.1)    Titantetrachlorid sowie
(1.3.2)    dem aus Stufe (1.2) resultierenden festen Zwischenprodukt,
– wobei mengenmässig eingesetzt werden auf 100 Gewichtsteile des Titantetrachlorids 1 bis 50 Gewichtsteile des Zwischenprodukts – unter ständiger Durchmischung 0,1 bis 2 Stunden auf einer Temperatur im Bereich von 40 bis 180°C hält und den dabei resultierenden Feststoff – als die modifizierte Titankomponente (1) – unter Abtrennung der verbleibenden flüssigen Phase isoliert,
sowie,
dass man (ii) als Cokatalysator (3) einsetzt ein Trialkoxisilan der Formel $R^4Si(OR^5)_3$, worin $R^4$ steht für einen Phenylrest oder $R^5$, und $R^5$ steht für einen nicht mehr als 8 Kohlenstoffatome aufweisenden Alkylrest.

**Claim**

A process for the preparation of homopolymers or copolymers of $C_2$-$C_{12}$-$\alpha$-monoolefins at from 20 to 160°C and under from 1 to 100 bar using a Ziegler-Natta catalyst system consisting of
(1)    a modified titanium component obtained by a method in which
(1.a)    first
(1.a.1)    titanium tetrachloride,
(1.a.2)    a modifying component and
(1.a.3)    a magnesium alcoholate of the formula $Mg(OR^1)_2$, where $R^1$ is a monovalent saturated aliphatic and/or aromatic hydrocarbon radical of not more than 10 carbon atoms, having a particle diameter of from 0.05 to 5.0 mm,
are reacted to give a solid intermediate and
(1.b)    then
(1.b.1)    titanium tetrachloride,
(1.b.2)    the solid intermediate resulting from (1.a) and, if required, additionally
(1.b.3)    a further modifying component
are reacted to give a solid, which is the modified titanium component (1),
(2)    an aluminium alkyl of the formula $AlR^2_3$, where $R^2$ is alkyl of not more than 8 carbon atoms, and
(3)    a cocatalyst,
with the provisos that the atomic ratio of titanium from the modified titanium component (1): aluminium from the aluminium alkyl (2) is from 1 : 10 to 1 : 500 and the molar ratio of aluminium alkyl (2): cocatalyst (3) is from 10 : 8 to 10 : 0.3, wherein

(i)    the modified titanium component (1) used is one which is obtained by a method in which first
(1.1)    in a first stage, a mixture of
(1.1.1)    titanium tetrachloride,
(1.1.2)    a modifying component of
(1.1.2.1)    a titanate of the formula $Ti(OR^3)_4$, wherein $R^3$ is a monovalent saturated aliphatic and/or aromatic hydrocarbon radical of no more than 10 carbon atoms, and
(1.1.2.2)    the acid dichloride of o-, m- and/or p-phthalic acid, and
(1.1.3.)    the magnesium alcoholate,
from 4 to 20 molar parts of the magnesium alcoholate being used per 100 molar parts of the titanium tetrachloride and from 3 to 100 molar parts of the titanate as well as from 5 to 50 molar parts of the acid dichloride being used per 100 molar parts of the magnesium alcoholate, is kept at from 40 to 180°C for from 0.1 to 2 hours with constant paramixing, and the resulting solid intermediate is isolated with removal of the remaining liquid phase, then
(1.2)    in a second stage, a mixture of
(1.2.1)    titanium tetrachloride,
(1.2.2)    the solid intermediate resulting from stage (1.1) and, if required, additionally
(1.2.3)    the acid dichloride of the o-, m- and/or p-phthalic acid as a further modifying component,
from 1 to 50 parts by weight of the intermediate as well as up to 15 parts by weight of the acid dichloride being used per 100 parts by weight of the titanium tetrachloride, is kept at from 40 to 180°C for from 0.1 to 2 hours with constant paramixing, and the resulting solid intermediate is isolated with removal of the remaining liquid phase, and finally
(1.3)    in a third stage, a mixture of
(1.3.1)    titanium tetrachloride and
(1.3.2)    the solid intermediate resulting from stage (1.2),
from 1 to 50 parts by weight of the intermediate being used per 100 parts by weight of the titanium tetrachloride, is kept at from 40 to 180°C for from 0.1 to 2 hours with constant paramixing, and the resulting solid, which is the modified titanium component (1), is isolated with removal of the remaining liquid phase, and
(ii)    the cocatalyst (3) used is a trialkoxysilane of the formula $R^4Si(OR^5)_3$, where $R^4$ is phenyl $R^5$, and $R^5$ is alkyl of not more than 8 carbon atoms.

**Revendication**

Procédé de préparation d'homo- et de copolymères d'$\alpha$-mono-oléfines en $C_2$ à $C_{12}$, à des températures de 20 à 160°C sous des pressions de 1 à 100 bars, à l'aide d'un système catalytique de Ziegler-Natta, formé de

(1)　un composant au titane modifié, préparé en faisant réagir

(1.a)　d'abord (dans un premier stade)

(1.a.1)　du tétrachlorure de titane,

(1.a.2)　un composant modifiant et

(1.a.3)　un alcoolate de magnésium de la formule $Mg(OR^1)_2$, dans laquelle $R^1$ désigne un groupe hydrocarboné monovalent de nature aliphatique saturée et(ou) aromatique, dont le nombre d'atomes de carbone n'est pas supérieur à 10, dans une granulométrie comprise entre 0,05 et 5,0 mm, pour l'obtention d'un produit intermédiaire solide, et

(1.b)　ensuite (dans un deuxième stade)

(1.b.1)　du tétrachlorure de titane et

(1.b.2)　le produit intermédiaire solide obtenu dans le stade (1.a), ainsi que

(1.b.3)　un autre composant modifiant pour l'obtention d'un produit solide, qui constitue le composant au titane modifié (1),

(2)　un composé d'alkylaluminium de la formule $AlR^2_3$, dans laquelle $R^2$ désigne un radical alkyle dont le nombre d'atomes de carbone n'est pas supérieurr à 8, et

(3)　un co-catalyseur,

avec la condition que le rapport atomique entre le titane du composant au titane modifié (1) et l'aluminium de l'alkyl-aluminium (2) soit compris entre 1 : 10 et 1 : 500 et le rapport molaire entre l'alkyl-aluminium (2) et le co-catalyseur (3) entre 10 : 8 et 10 : 0,3, caractérisé en ce que l'on met en œuvre:

(i)　en tant que composant au titane modifié (1) un composant obtenu en agitant pendant 0,1 à 2 heures, à une température comprise entre 40 et 180°C:

(1.1)　dans un premier stade un mélange

(1.1.1)　de tétrachlorure de titane,

(1.1.2)　d'un composant modifiant, formé de

(1.1.2.1)　un ester de l'acide titanique de la formule $Ti(OR^3)_4$, dans laquelle $R^3$ désigne un groupe hydrocarboné monovalent de nature aliphatique saturée et(ou) aromatique, dont le nombre d'atomes de carbone n'est pas supérieur à 10,

(1.1.2.2)　un dichlorure de l'acide ortho-, méta- et(ou) para-phtalique et

(1.1.3.)　l'alcoolate de magnésium, les proportions molaires étant de 4 à 20 parties d'alcoolate de magnésium pour 100 parties de tétrachlorure de titane et de 3 à 100 parties d'ester de l'acide titanique et de 5 à 50 parties de dichlorure (phtalique) pour 100 parties d'alcoolate de magnésium, le produit intermédiaire solide formé étant isolé par l'élimination de la phase liquide résiduelle, puis

(1.2)　dans un deuxième stade un mélange (1.2.1)　de tétrachlorure de titane,

(1.2.2)　du produit intermédiaire solide obtenu dans le stade (1.1), et éventuellement

(1.2.3)　de dichlorure ortho-, méta- et(ou) para-phtalique en tant que composant modifiant supplémentaire, les proportions pondérales étant de 1 à 50 parties en poids du produit intermédiaire et jusqu'à 15 parties en poids du dichlorure (phtalique) pour 100 parties en poids de tétrachlorure de titane, le produit intermédiaire solide formé étant isolé par l'élimination de la phase liquide résiduelle, puis

(1.3)　dans un troisième stade un mélange

(1.3.1)　de tétrachlorure de titane et

(1.3.2)　du produit intermédiaire solide obtenu dans le stade (1.2), les proportions pondérales étant de 1 à 50 parties en poids du produit intermédiaire pour 100 parties en poids de tétrachlorure de titane, l'élimination de la phase liquide résiduelle permettant d'isoler le produit solide formé, qui constitue le composant au titane modifié (1), et

(ii)　en tant que co-catalyseur (3) un trialcoxy-silane de la formule $R^4Si(OR^5)_3$, dans laquelle $R^4$ est un groupe phényle ou $R^5$ et $R^5$ représente un radical alkyle, dont le nombre d'atomes de carbone n'est pas supérieur à huit.